# EUROPEAN PATENT APPLICATION

(11) **EP 2 960 568 A1**
(43) Date of publication of application: **30.12.2015**
(21) Application number: 14753713.8
(22) Date of filing: 25.02.2014
(51) Int. Cl.: F21S 2/00, F21Y 101/02, F21Y 103/00

(54) **SURFACE LIGHT-EMITTING DEVICE**

(30) Priority: 25.02.2013 JP 2013034367
(71) Applicant: Nippon Electric Glass Co., Ltd., Otsu-shi, Shiga 520-8639 (JP); Hayamizu Denki Kogyo Kabushikikaisha, Hyogo 653-0052 (JP)
(72) Inventor: HASEGAWA Yoshinori, Otsu-shi Shiga 520-8639 (JP); NODA Takayuki, Otsu-shi Shiga 520-8639 (JP); OKI Koji, Kobe-shi Hyogo 653-0052 (JP)
(74) Representative: Tetzner, Michael
(86) International application number: PCT/JP2014/054428
(87) International publication number: WO 2014/129644

(57) **Abstract**

A surface light-emitting device includes a light guide plate (1) comprising glass plates (12) respectively in close contact with and fixed to both surfaces of a resin plate (11) via adhesive layers (14), and a light source (2) for causing light to enter the light guide plate from one end surface of the light guide plate (1). As the light source (2), a light source having a blue central wavelength in a wavelength range of 460 nm or more and 490 nm or less, or a light source having a blue central wavelength in a wavelength range of 440 nm or more and less than 460 nm and having a color temperature of 4,000 K or lower is used.

## Description

### Technical Field

The present invention relates to a surface light-emitting device using a light guide plate.

### Background Art

A surface light-emitting device using a light guide plate is widespread, which has the following structure. Light enters an inside of the light guide plate from a light source positioned in proximity to one side or two opposed sides of the light guide plate through an end surface of the light guide plate. By propagating the incident light within surfaces of the light guide plate, and scattering the incident light at light scattering portions formed on the light guide plate to take the scattered light to an outside, the light guide plate is caused to emit light in a sheet-like manner (see, for example, Patent Literatures 1 to 3).

As the light guide plate, a glass plate or a resin plate such as an acrylic plate is often used alone. The light scattering portions are generally formed on a surface of the light guide plate by a method such as printing a scattering pattern with paint or ink or engraving a scattering pattern with a laser.

### Citation List

Patent Literature 1: JP 2007-80531 A
Patent Literature 2: WO 2010/150364 A1
Patent Literature 3: JP 2703412 B2

### Summary of Invention

### Technical Problem

Incidentally, a surface light-emitting device using a light guide plate is widely used indoors and outdoors in the current situation.

However, when a resin plate is used as the light guide plate, the light guide plate tends to have insufficient bending stiffness, chemical resistance, scratch resistance, weather resistance, and the like, and in particular, deterioration thereof is conspicuous when used outdoors.

On the other hand, when a glass plate is used as the light guide plate, the problems of the resin plate described above are resolved, but there are weak points that the weight increases compared with that of a resin plate and the light guide plate is more liable to be broken on impact.

Therefore, the inventors of the present application have, as a result of vigorous research, developed a hybrid (stacked) light guide plate in which glass plates are brought into close contact with and fixed to both surfaces of a resin plate via adhesive layers.

This can reinforce, with the surface layer glasses, the resin plate having lower bending stiffness to reduce a thickness of the light guide plate. At this time, if a thickness of the glass plates is small, there is almost no influence of an increased weight. On the other hand, the glass plates that are excellent in chemical resistance, scratch resistance, and weather resistance sandwich the resin plate therebetween, and thus, the resin plate is protected from an external environment. Therefore, the chemical resistance, scratch resistance, and weather resistance can be maintained at a satisfactory level without undue increase in weight of the light guide plate while securing satisfactory bending stiffness.

However, a surface light-emitting device using such a hybrid light guide plate still has a problem to be solved.

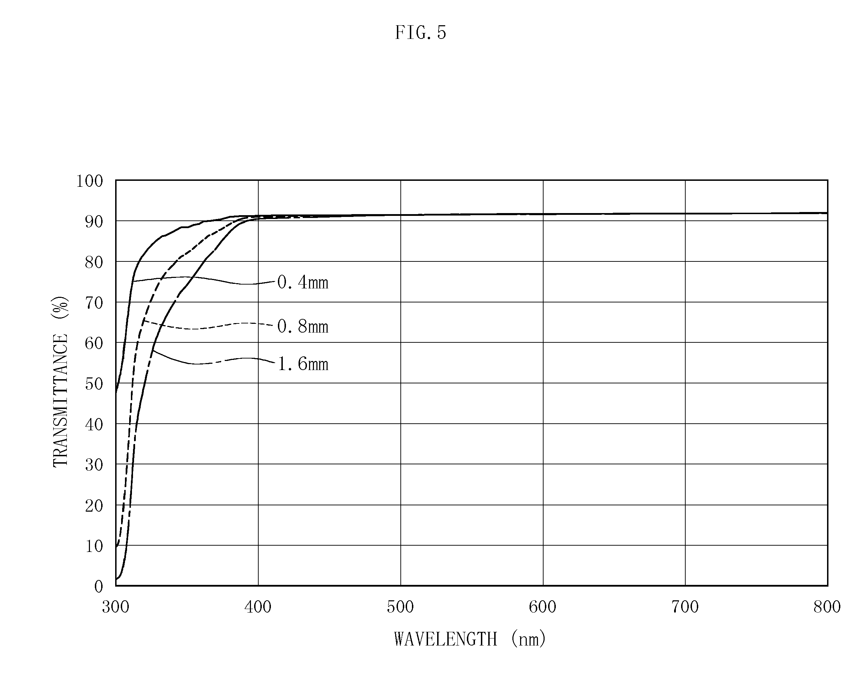

Human visible light changes from blue through green to red from a shorter wavelength to a longer wavelength. When the intensity balance among those changes, different colors are recognized. However, in a structure of the light guide plate, particularly an adhesive that forms the adhesive layers often absorbs much light in a range between, for example, an ultraviolet region to a visible light shortwave region (about 450 nm or less) as shown in transmittance curves of FIG. 5. In FIG. 5, cases in which the adhesive layer has thicknesses of 0.4 mm, 0.8 mm, and 1.6 mm are exemplified, and the adhesive layer tends to absorb more light as the thickness thereof becomes larger. The adhesive layer of the light guide plate expands in a planar manner, and thus, for light that propagates within the light guide plate along a planar direction, an apparent thickness of the adhesive layer is large, and influence of the absorption is inevitably large. Therefore, when an amount of an included blue light component of the light source is large in an absorption region of the adhesive, it is difficult to propagate light within the light guide plate under a state in which color of blue light emitted from the light source is maintained as it is, and a problem may arise that color of light emitted from the light source and color of light emitted from the light guide plate greatly differ. As additional description, when, for example, white light (including all components of R, G, and B) is radiated from the light source and is propagated within the light guide plate, under the influence of the adhesive, the blue light component is absorbed much, and, as the light is guided, the emitted light becomes more yellowish (a mixture of R and G) to deteriorate color reproducibility of light from the light source.

Note that, such a problem is considered to be resolved by improving light absorbing characteristics of the adhesive and realizing high transmittance in an entire wavelength region of visible light (substantially from 420 nm to 690 nm). However, in attaining those characteristics, adhering characteristics and ultraviolet resistance characteristics of the adhesive are lowered, and at the same time, a special adhesive is required to be used, which may increase the cost.

In view of the actual situation described above, a technical object of the present invention is to reduce as much as possible difference between color of light emitted from a light source and color of light emitted from a light guide plate in a surface light-emitting device.

### Solution to Problem

According to a first invention conceived to achieve the above-mentioned object, there is provided a surface light-emitting device, comprising: a light guide plate; and a light source for causing light to enter the light guide plate from at least one end surface of the light guide plate, the light guide plate comprising: a resin plate; glass plates respectively in close contact with and fixed to both surfaces of the resin plate via adhesive layers each comprising an adhesive; and a light scattering portion for guiding light propagating within the resin plate and the glass plates to an outside, the light source having a blue central wavelength in a wavelength range of 460 nm or more and 490 nm or less.

According to such a structure, the blue central wavelength of the light source shifts to a longer wavelength side with respect to a wavelength region in which absorption by the adhesive is liable to occur. Therefore, absorption by the adhesive is inhibited, and great difference between color of light emitted from the light source and color of light emitted from the light guide plate can be prevented from being caused.

According to a second invention conceived to achieve the above-mentioned object, there is provided a surface light-emitting device, comprising: a light guide plate; and a light source for causing light to enter the light guide plate from at least one end surface of the light guide plate, the light guide plate comprising: a resin plate; glass plates respectively in close contact with and fixed to both surfaces of the resin plate via an adhesive; and a light scattering portion for guiding light propagating within the resin plate and the glass plates to an outside, the light source having a blue central wavelength in a wavelength range of 440 nm or more and less than 460 nm and a color temperature of 4,000 K or lower.

According to such a structure, even when the blue central wavelength of the light source is included in the wavelength region in which absorption by the adhesive is liable to occur, if the color temperature thereof is 4,000 K or lower (for example, warm white or incandescent), an amount of a blue light component included in the light source itself is smaller, and thus, influence of absorption of light by the adhesive is smaller. In other words, even if light of the blue light component of the light source is absorbed, reduction in blue light component is difficult to perceive by a human eye, and great difference is not caused between color of light emitted from the light source and color of light emitted from the light guide plate.

In the structure described above, it is preferred that the light scattering portion be formed on a surface of any one of the resin plate and the glass plate and be covered with the adhesive layer.

In other words, according to the present invention, the light scattering portions may be formed on an outer surface of the light guide plate in an exposed state. However in this case, even when the surface light-emitting device is shut off, outside light is scattered at the scattering portions. A scattering pattern of the scattered outside light is liable to be visually recognized from outside, and hence transparency of the light guide plate is impaired. Further, when the surface light-emitting device is lit, light is visually recognized to be emitted in the shape of the scattering pattern of the light scattering portions (for example, in a dot-like manner), and the light emission sometimes deviates from ideal surface light emission. Further, there is a fear that the light scattering portions are deteriorated by an external environment to adversely affect the transparency and a light emitting state of the light guide plate. In particular, when the scattering pattern of the light scattering portions is engraved with a laser on a surface of the light guide plate that is a resin plate, if the light scattering portions continue to be exposed to the external environment, deterioration of the surface of the resin plate damaged by heat generated by irradiation by the laser is liable to progress, and deterioration of the transparency of the light guide plate and the like are conspicuous.

Therefore, the structure described above is preferred. This can prevent the light scattering portions from being deteriorated, because the light scattering portions are covered with the adhesive layer and are not exposed to the external environment. Further, when the light scattering portions are covered with the adhesive layer, scattering by outside light is reduced. Thus, the light scattering portions are not directly visually recognized with ease from the outside and the transparency of the light guide plate can be satisfactorily secured. Further, there is an enough distance from the light scattering portions to the surface of the light guide plate, and thus, light scattered by the light scattering portions expands uniformly before reaching the surface of the light guide plate. As a result, the entire surface of the light guide plate corresponding to the light scattering portions tends to be visually recognized to emit light in a sheet-like manner. Here, the light scattering portions are covered with the adhesive layer, but, there is difference in refractive index between the adhesive layer and the light scattering portions, and thus, adequate scattering occurs at an interface with the light scattering portions, and a light scattering function of the light scattering portions is maintained.

In the structure described above, it is preferred that the light scattering portion be formed on a surface of the resin plate.

In other words, the resin plate is more excellent in processability than a glass plate, and thus, the light scattering portions can be easily formed and manufacturing costs can be reduced.

In the structure described above the light scattering portion may be formed on a surface of any one of the resin plate and the glass plates by printing a pattern with paint or ink containing a light scattering agent.

This can reduce a load on a surface of a plate material as a subj ect on which the light scattering portions are formed compared with a case in which the light scattering portions are engraved on a surface of a resin plate or a glass plate with a laser, by sandblasting, or the like.

In the structure described above, it is preferred that the resin plate have a thickness that is larger than a thickness of each of the glass plates.

This can suitably reduce weight of the light guide plate.

In the structure described above, it is preferred that the glass plates each have a thickness of from 0.05 mm to 1 mm.

In the structure described above, it is preferred that the light source be an LED.

### Advantageous Effects of Invention

As described above, according to the surface light-emitting device of the one embodiment of the present invention, it is possible to reduce as much as possible difference between color of light emitted from a light source and color of light emitted from a light guide plate and reproduce the color of light emitted from the light source by the light guide plate.

### Brief Description of Drawings

FIG. 1 is a longitudinal side view for illustrating a surface light-emitting device according to a first embodiment of the present invention.
FIG. 2 is a transverse plan view of the surface light-emitting device of FIG. 1.
FIG. 3 is a conceptual view for illustrating a multichip LED.
FIG. 4 is a conceptual view for illustrating a single chip LED.
FIG. 5 is a graph for showing exemplary transmittance curves of an adhesive.
FIG. 6 is a graph for showing exemplary spectra of the multichip LED.
FIG. 7 is a graph for showing exemplary spectra of the single chip LEDs.
FIG. 8 is a longitudinal side view for illustrating a surface light-emitting device according to a third embodiment of the present invention.

### Description of Embodiments

Embodiments of the present invention are described in the following with reference to the attached drawings.

### <First Embodiment>

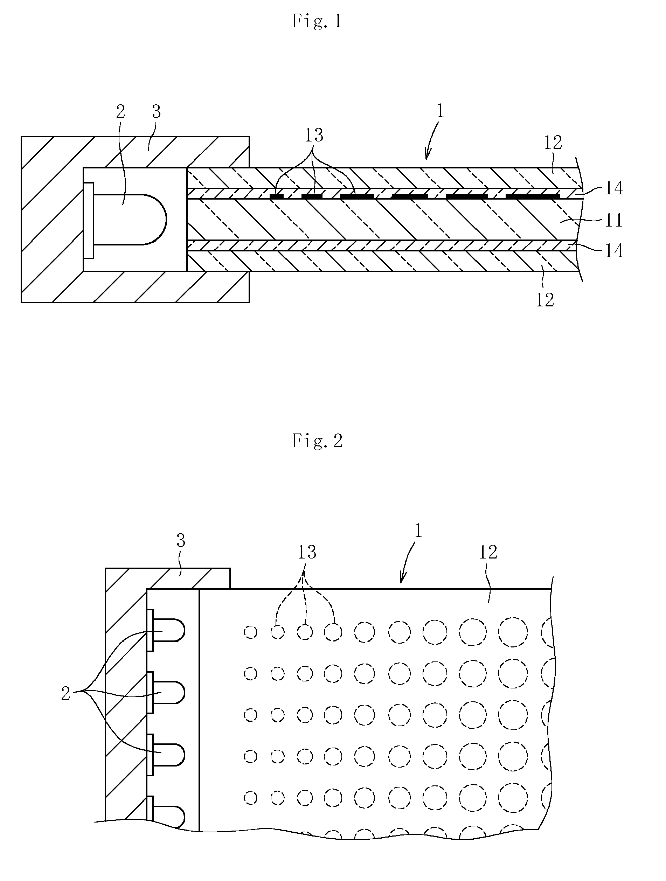

As illustrated in FIG. 1, a surface light-emitting device according to a first embodiment of the present invention comprises a light guide plate 1, a light source 2 for guiding light from an end surface of one side of the light guide plate 1 into the light guide plate 1, and a housing 3 into which the one side of the light guide plate 1 is fit under a state in which the housing 3 houses the light sources 2.

The light guide plate 1 comprises a resin plate 11, glass plates 12 respectively in close contact with and fixed to both surfaces of the resin plate 11, and light scattering portions 13 for guiding light from the light sources 2 propagating within the resin plate 11 and the glass plates 12 to an outside.

Such a hybrid structure of the resin plate 11 and the glass plates 12 reinforces the resin plate 11 with the glass plates 12 and protects the resin plate 11 from an external environment with the glass plates 12. Therefore, satisfactory characteristics derived from the glass plates 12 such as chemical resistance, scratch resistance, and weather resistance can be exhibited without undue increase in weight while improving bending stiffness.

Further, the resin plate 11 and the glass plates 12 are integral with each other, and thus, work for assembling the light guide plate 1 into the housing 3 is extremely simple. The light guide body 1 is often assembled into the housing 3 in the field of actual assembly, and thus, labor savings can be attained in work in the field.

Further, the light guide plate 1 has a structure in which both the surfaces of the resin plate 11 are sandwiched by the glass plates 12, and thus, it is considered that, compared with a case in which the light guide plate 1 is formed of the resin plate 11 alone, deterioration of the light sources 2 due to heat can be inhibited. The reason is that such effects can be expected that deformation of the resin plate 11 due to heat is inhibited by the glass plates 12, and satisfactory heat dissipation can be realized through the glass plates 12 that are more excellent in heat conductivity than the resin plate 11.

The resin plate 11 and the glass plates 12 are in close contact with and fixed to each other via adhesive layers 14 formed of an adhesive. In this embodiment, the light scattering portions 13 are covered with the adhesive layer 14 in a state of being formed on one surface of the resin plate 11. In other words, the light scattering portions 13 are in close contact with the resin plate 11 and the adhesive layer 14 without being exposed to an outside.

As the resin plate 11, a plate that is transparent to visible light (for example, having a transmittance of 90% or more in an entire wavelength region of from 420 nm to 690 nm with regard to a thickness for use) is used. Specifically, the resin plate 11 is, for example, an acrylic, a polycarbonate, a polyethylene terephthalate (PET), a polypropylene (PP) a cycloolefin polymer (COP), or a urethane.

Similarly, as the glass plate 12, a plate that is transparent to visible light (for example, having a transmittance of 90% or more in the entire wavelength region of from 420 nm to 690 nm with regard to a thickness for use) is used. Specifically, the glass plate 12 is, for example, soda glass, borosilicate glass, alkali-free glass, quartz glass, lead glass, or crystallized glass, and in particular, glass that is generally called white plate glass is suitable.

The glass plate 12 has a thickness that is smaller than a thickness of the resin plate 11. Specifically, the thickness of the glass plate 12 is preferably from 0.05 mm to 1 mm, more preferably from 0.07 mm to 0.5 mm, and further preferably from 0.1 mm to 0.3 mm. When the glass plate 12 has a thickness of 1 mm or less, flexibility appears in the glass plate 12. Therefore, when an impact is applied to the light guide plate 1 from the outside, the glass plate 12 is flexibly deformed so as to follow flexural deformation of the resin plate 11 as a core material. As a result, even if the glass plate 12 is a thin plate, the glass plate 12 is less liable to be broken. Such an effect is remarkable when the thickness is 0.5 mm or less, and in particular, when the thickness is 0.3 mm or less, the effect becomes greater together with a lighter weight. On the other hand, from the viewpoint of improving stiffness of the light guide plate 1, when the glass plate 12 has a thickness of 0.1 mm or more, sufficient stiffness can be secured even if the light guide plate 1 has a large area (for example, 500 mm or more per side).

There is a large difference in thermal expansion coefficient between coefficient the resin plate 11 and the glass plates 12, and thus, as the adhesive that forms the adhesive layers 14, an adhesive that is expansive to such an extent that can absorb the difference in thermal expansion between the two plates is preferred.

With regard to a kind of the adhesive, as for a liquid adhesive, a room temperature curable type, an energy curable type (for example, an ultraviolet radiation curable type), or the like is used. On the other hand, as for a hot melt adhesive sheet, a thermoplastic type, a thermosetting type, or the like is used. Specifically, exemplary hot melt adhesive sheets include ethylene vinyl acetate copolymer (EVA) and thermoplastic polyurethane (TPU). Further, a pressure-sensitive adhesive such as an optically transparent pressure-sensitive adhesive sheet can also be used.

As illustrated in FIG. 2, the light scattering portions 13 are formed by printing a dot pattern on a surface of the resin plate 11 with, for example, paint or ink containing a light scattering agent made of a transparent or colored pigment or the like. The dot pattern is formed so that a dot size thereof becomes larger as a distance from the light sources 2 becomes larger. With this, although light attenuates (intensity thereof reduces) more as the distance from the light sources 2 becomes larger, light that propagates within the light guide plate 1 is scattered easier as the distance from the light sources 2 becomes larger, and thus, uniform light emission of the light scattering portions 13 of the light guide plate 1 as a whole can be realized. Note that, by, instead of changing the dot size, forming dots so as to be more densely positioned as the distance from the light sources 2 becomes larger, a similar effect can be enjoyed.

As described above, the light scattering portions 13 formed on the surface of the resin plate 11 are completely covered with the adhesive layer 14 and are not exposed to the external environment, and thus, the light scattering portions 13 can be prevented from being deteriorated. Further, the light scattering portions 13 covered with the adhesive layer 14 are embedded in the adhesive layer 14, and thus, scattering by outside light is reduced. As a result, the light scattering portions 13 are not directlyvisually recognized with ease from the outside and the transparency of the light guide plate 1 can be satisfactorily secured. Further, an enough distance can be secured from the light scattering portions 13 to the surface of the light guide plate 1, and thus, light scattered by the light scattering portions 13 expands uniformly before reaching the surface of the light guide plate 1. Therefore, there is a tendency that the entire surface of the light guide plate 1 corresponding to the light scattering portions 13 is visually recognized to emit light not in a dot-like manner but in a sheet-like manner.

Here, the light scattering portions 13 may be formed on a surface of the glass plate 12 on a side facing the adhesive layer 14. Further, the light scattering portions 13 may be formed on both sides of the resin plate 11 without being limited to one side thereof. In this case, it is preferred that the scattering patterns of the light scattering portions 13 on both sides of the resin plate 11 be plane symmetric with each other.

The light scattering portions 13 may be formed by, instead of printing the dot pattern, for example, engraving a linear pattern with a laser or engraving an uneven pattern by sandblasting. Also in those cases, it is preferred that the density of the scattering pattern become graduallyhigher as the distance from the light sources 2 becomes larger.

The light scattering portions 13 may be formed on the entire surface or may be formed only on a part of the light guide plate 1. In the former case, the entire surface of the light guide plate 1 emits light, which is suitable for illumination or the like. In the latter case, by, for example, forming the light scattering portions 13 only in regions corresponding to a letter or an illustration, the letter or the illustration can be lit and displayed so that the surface light-emitting device can function as a light-emitting type display device (for example, a sign such as a signboard or a welcome board).

As illustrated in FIG. 2, the plurality of light sources 2 are arranged along one side of the light guide plate 1. Note that, the plurality of light sources 2 may be arranged along two opposing sides, of the light guide plate 1.

In this embodiment, from the view points of lowering power consumption and lowering heat generation, the light source 2 is formed of LEDs. Note that, as the light sources 2, other than LEDs, for example, fluorescent tubes, cold cathode fluorescent lamps (CCFLs), hot cathode fluorescent lamps (HCFLs), external electrode fluorescent lamps (EEFLs), plasma lamps, or the like can be applied.

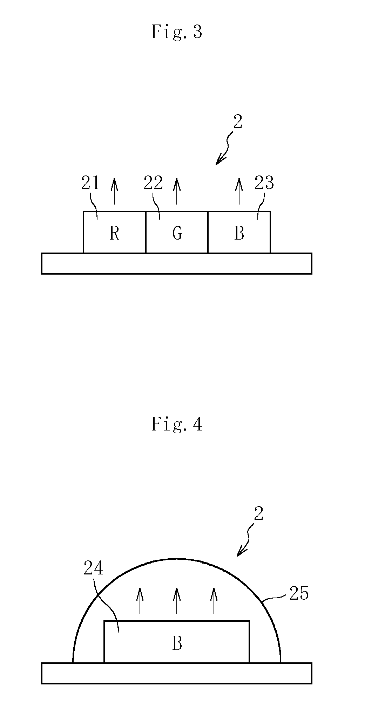

As an LED forming the light source 2, for example, as illustrated in FIG. 3, a multichip LED having LEDs 21, 22, and 23 corresponding to R, G, and B, respectively, mounted thereon, or, as illustrated in FIG. 4, a single chip LED having one single color LED 24 mounted thereon and a fluorescent material 25 covering a light emitting surface side thereof can be applied. Note that, in the case of a single chip white LED, white light emission is reproduced by covering a blue LED with a yellow fluorescent material, for example and in the case of a multi tip white LED, white light emission is reproduced by simultaneously lighting R, G, and B LEDs, for example.

In this embodiment, the light source 2 has a blue central wavelength in a wavelength range of 460 nm or more and 490 nm or less.

With this, as shown by transmittance curves of FIG. 5, even when absorption occurs from an ultraviolet radiation region to a visible light short wavelength region (about 450 nm or less) in the adhesive forming the adhesive layers 14, the blue central wavelength is shifted to a longer wavelength side with respect to a wavelength region in which absorption by the adhesive layers 14 occurs. Therefore, absorption by the adhesive layers 14 is inhibited, and difference between color of light emitted from the light guide plate 1 and color of light emitted from the light sources 2 can be reduced. Therefore, even when a general-purpose inexpensive adhesive is used, the color of light emitted from the light sources 2 can be reproduced by the light guide plate 1 without any problem.

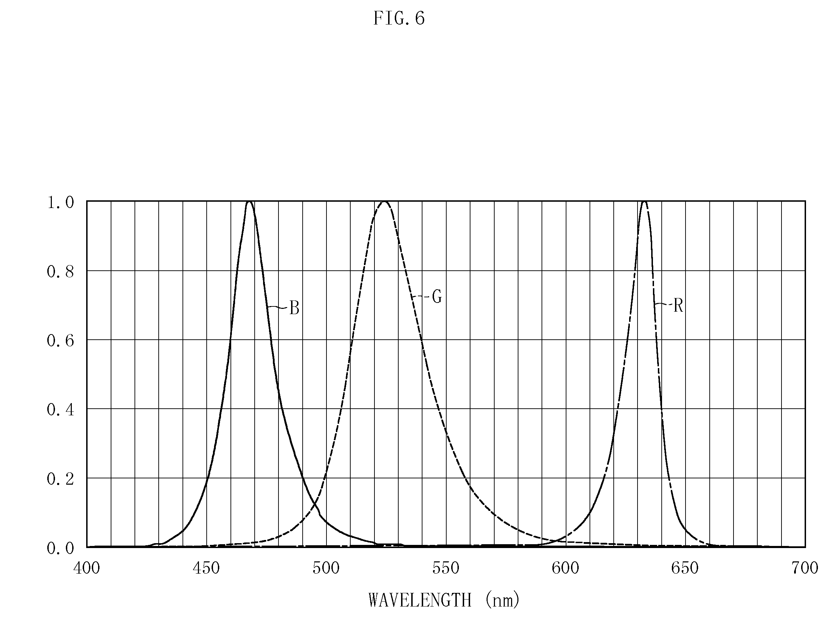

Here, a mainstream of the multichip LED described above has, as shown in FIG. 6, a blue central wavelength of about from 460 nm to 470 nm, and thus, the condition described above is easy to satisfy. Note that, in FIG. 6, a spectrum of a red LED, a spectrum of a green LED, and a spectrum of a blue LED are denoted by R, G, and B, respectively.

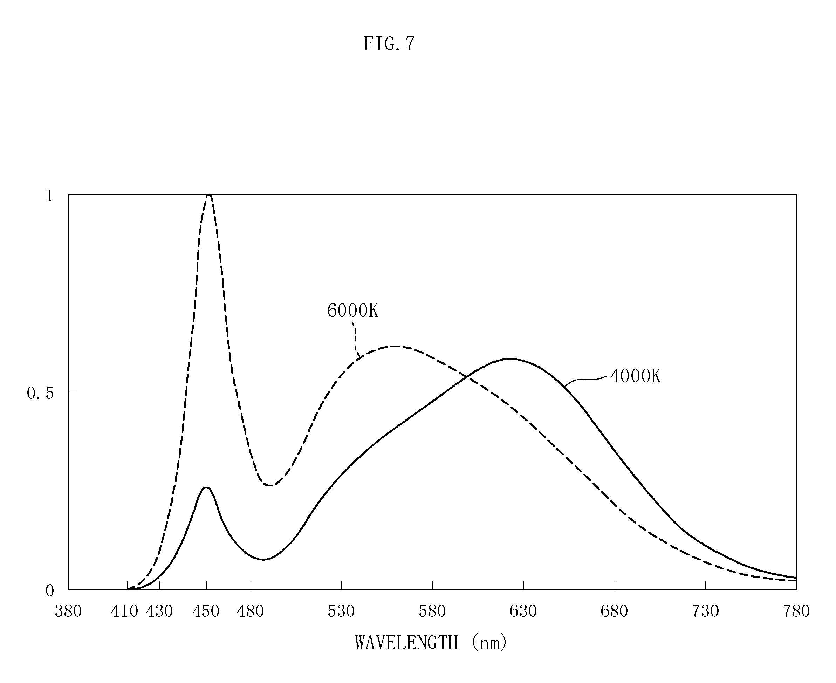

On the other hand, a mainstream of the blue LED used as the single chip LED described above has a blue central wavelength of about 440 nm or more and less than 460 nm (see FIG. 7). However, by using the blue LED having a blue central wavelength of 460 nm or more and 490 nm or less, similarly to the case of the multichip LED, the condition described above can be satisfied.

### <Second Embodiment>

A surface light-emitting device according to a second embodiment of the present invention differs from the surface light-emitting device according to the first embodiment in structure of the light sources.

Specifically, in the second embodiment, the light source 2 has a blue central wavelength in a wavelength range of 440 nm or more and less than 460 nm and a color temperature of 4,000 K or lower.

With this, even when the blue central wavelength of the light source 2 is included in the wavelength region in which absorption by the adhesive layers 14 is liable to occur, if the color temperature thereof is 4, 000 K or lower (for example, warm white or incandescent), an amount of a blue light component included in the light sources 2 itself is smaller, and thus, influence of absorption of light by the adhesive layers 14 is smaller. In other words, even if light of the blue light component of the light source 2 is absorbed, reduction in blue light component is difficult to perceive by a human eye, and great difference is not caused between color of light emitted from the light sources 2 and color of light emitted from the light guide plate 1.

Here, a mainstream of the blue LED used as the single chip LED has a blue central wavelength of 440 nm or more and less than 460 nm, but, a magnitude of a peak of the blue central wavelength depends on the color temperature. As shown in FIG. 7, in the case of a single chip blue LED having a blue central wavelength of about 450 nm, with regard to daylight white having a color temperature of about 6, 000 K, a peak of the blue light component is higher than a peak of a green light component and a peak of a red light component in the wavelength region of visible light. On the other hand, with regard to warm white having a color temperature of about 4,000 K, the peak of the blue light component becomes considerably lower. Therefore, when the blue central wavelength is in the wavelength range of 440 nm or more and less than 460 nm (preferably 445 nm or more and 455 nm or less) and the color temperature is 4,000 K or lower (preferably 3, 000 K or lower corresponding to incandescent), the blue light component contained in the wavelength region in which absorption by the adhesive occurs is inhibited in advance. Therefore, in the case of the single chip LED, the light sources 2 that satisfy the conditions described above can be prepared with ease.

In this case, it is preferred that a peak higher than the peak of the blue light component exist on a longer wavelength side with respect to 460 nm. In other words, it is preferred that the peak of the blue light component be lower than the peak of the green light component and of the red light component. Note that, in FIG. 7, a highest peak is at about 620 nm.

Note that, the conditions described above may be satisfied by a multichip LED.

### <Third Embodiment>

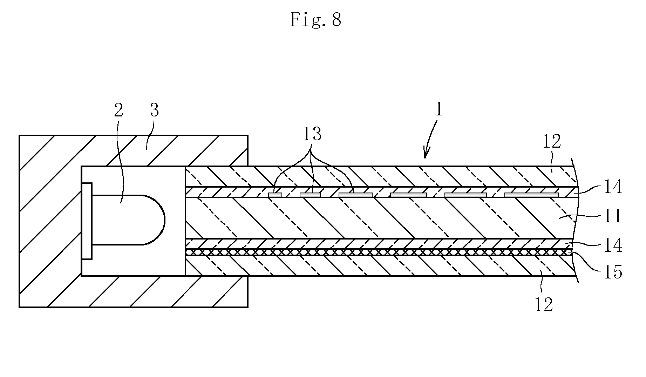

As illustrated in FIG. 8, a surface light-emitting device according to a third embodiment of the present invention differs from the surface light-emitting device according to the first and second embodiments in that a functional coating 15 is formed on the surface of the glass plate 12.

Exemplary functional coatings 15 include a total reflection film (mirror) formed of a metal film or a dielectric film. This prevents scattered light within the light guide plate 1 from being emitted to the outside on the functional coating 15 side by being reflected, and thus, only one surface side of the light guide plate 1 opposite to the functional coating 15 side emits light, which is suitable for illumination or the like. Here, the total reflection film may be white, and in this case, the light guide plate 1 is a white plate when shut off.

The functional coating 15 may be formed of a half mirror. By adjusting the transmittance by the half mirror, a ratio of amounts of light emitted to both surfaces of the light guide plate 1 can be changed, and thus, various kinds of designing are possible, which improves design characteristics. For example, when a surface light-emitting device formed using the light guide plate 1 in which a half mirror with a relatively lowered transmittance is formed is used as a wall material, when the surface light-emitting device is shut off, an opposite side of the wall can be visually recognized because of the half mirror, but, when the surface light-emitting device is lit, light is emitted only to one side, and thus, the opposite side of the wall cannot be visually recognized. In other words, visual recognizability of the opposite side of the wall can be appropriately switched. Further, when the surface light-emitting device is used as a downward illumination attached to a ceiling, downward light from a lower surface side of the light guide plate 1 directly illuminates an inside of a room, and at the same time, the half mirror can illuminate the ceiling located on an upper surface side of the light guide plate 1, and the illumination has a high design characteristics. Note that, as the half mirror, white reflection film can be applied.

The functional coating 15 may include a totally transmitting portion (without a mirror), a totally reflecting portion (total reflection mirror), and a partially transmitting portion (half mirror). This can adjust light emitting characteristics at respective locations of the light emitting surface, which enables various kinds of designing including display of a letter or an illustration.

The functional coating 15 may be a transmission film having wavelength selectivity. With this, when the surface light-emitting device is used as illumination, harmful light or unnecessary light for an object to be illuminated can be shut off due to the wavelength transmission selectivity of the functional coating 15. For example, when the surface light-emitting device is used as illumination for a plant factory, light in a green wavelength region that is harmful to the plant is cut by the functional coating 15 before radiation of the light.

Note that, the light guide plate 1 exhibits excellent chemical resistance, scratch resistance, and weather resistance because the glass plates 12 are located on the outer surfaces thereof, and thus, it is preferred that the functional coating 15 be formed on a surface of the glass plate 12 on the adhesive layer 14 side. However, when the functional coating 15 is soil-resistant coating or the like, it is preferred that the functional coating 15 be formed on an outer surface side of the glass plate 12 to be located on an outermost surface of the light guide plate 1.

From the viewpoint of film forming accuracy and the like, it is preferred that the functional coating 15 be formed on the surface of the smooth glass plate 12, but the functional coating 15 may be formed on a surface of the resin plate 11.

Here, the function of the functional coating 15 described above may be given to the adhesive layer 14. This eliminates the necessity of additionally forming the functional coating 15.

Note that, the present invention is not limited to the embodiments described above, and various kinds of modifications are possible. For example, in the embodiments described above, cases in which the light scattering portions 13 are formed on the surface of the resin plate 11 or on the inner surface of the glass plate 12 on the adhesive layer 14 side are described, but the light scattering portions 13 may be formed on an outer surface of the glass plate 12. In this case, the light emitting state of the light guide plate 1 tends to be brighter.

Further, in the embodiments described above, the light guide plate 1 that is planar is described, but the light guide plate 1 may be curved. When the curved light guide plate 1 is manufactured, a curved glass plate may be bonded to a curved resin plate, or, to a curved resin plate, a planar glass plate may be bonded in a state of being deformed so as to conform to the surface of the curved resin plate.

Further, in the embodiments described above, a case that a light emitting function is a main function of the light guide plate 1 is described, but a touch panel function may be given to the light guide plate 1. In this case, a touch sensor function may be added to the resin plate 11 used in the light guide plate 1, a sheet having the touch sensor function may be additionally inserted in the adhesive layer between the resin plate 11 and the glass plate 12, or the touch sensor function may be directly given to the surface layer glass. Further, as a detection method of the touch panel, a resistive method, a capacitive sensing method, or the like is adopted.

### Examples

### <Example 1>

(1) size and shape: planar plate of 400 mm×400 mm
(2) resin plate: acrylic plate having a thickness of 5 mm
(3) glass plate: alkali-free glass having a thickness of 0.2 mm
(4) adhesive layer: EVA having a thickness of 0.4 mm
(5) light source: single chip white LED (having a blue central wavelength of 450 nm and a color temperature of 3,000 K)
(6) light scattering portions : screen printing of a dot pattern on one entire surface of the resin plate
(7) functional coating: absent

According to (1) to (7) above, a window of a double sided light emission type was manufactured, which had a feature of functioning as a transparent window when shut off, and serving as a wall that emits white light when lit. Further, the light guide plate satisfactorily reproduced color of light emitted from the light source.

### <Example 2>

(1) size and shape: planar plate of 800 mm×800 mm
(2) resin plate: acrylic plate having a thickness of 5 mm
(3) glass plate: alkali-free glass having a thickness of 0.2 mm
(4) adhesive layer: TPU having a thickness of 0.4 mm
(5) light source: single chip white LED (having a blue central wavelength of 450 nm and a color temperature of 3,000 K)
(6) light scattering portions : screen printing of a dot pattern on one entire surface of the resin plate
(7) functional coating: a total reflection mirror was formed in a center portion on an adhesive surface side of one of the glass plates, and a half mirror having a transmittance of 50% was formed in an edge region in width of the center portion has in a range of 100 mm.

According to (1) to (7) above, episcopic illumination was manufactured, which had a feature of illuminating downward with the total reflection mirror on its rear surface side, and transmitting light to the rear surface side with the half mirror formed therearound to illuminate a ceiling portion in a frame-like manner. Further, the light guide plate satisfactorily reproduced color of light emitted from the light source.

### <Example 3>

(1) size and shape: planar plate of 300 mm×600 mm
(2) resin plate: acrylic plate having a thickness of 5 mm
(3) glass plate: alkali-free glass having a thickness of 0.3 mm
(4) adhesive layer: Optically transparent pressure-sensitive adhesive sheet having a thickness of 0.3 mm
(5) light source: multichip (RGB) white LED (having a blue central wavelength of 468 nm and a color temperature of 6,500 K)
(6) light scattering portions : screen printing of a dot pattern on one entire surface of the resin plate
(7) functional coating: absent

According to (1) to (7) above, a Wedding board having letters formed thereon was manufactured, which had a feature of being able to change color of the letters by switching the color of light emitted from the light source to white, blue, green, red, or the like. Further, the light guide plate satisfactorily reproduced color of light emitted from the light source.

### <Example 4>

(1) size and shape: planar plate of 600 mm×600 mm
(2) resin plate: acrylic plate having a thickness of 5 mm
(3) glass plate: alkali-free glass having a thickness of 0.1 mm
(4) adhesive layer: Optically transparent pressure-sensitive adhesive sheet having a thickness of 0.3 mm
(5) light source: multichip (RGB) white LED (having a blue central wavelength of 468 nm and a color temperature of 6,500 K)
(6) light scattering portions : screen printing of a dot pattern on one entire surface of the resin plate
(7) functional coating: a total reflection mirror was formed on the adhesive surface side of one of the glass plates, and a wavelength selective transmission film for cutting a green wavelength was formed on the adhesive surface side of another of the glass plates.

According to (1) to (7) above, episcopic illumination for a plant factory was manufactured, which had a feature of emitting light only on a plant side with the total reflection mirror on the rear surface side and cutting the wavelength region harmful to the plant (green) with the wavelength selective transmission film on a front surface side. Further, the light guide plate satisfactorily reproduced color of light emitted from the light source.

### <Example 5>

(1) size and shape: planar plate of 300 mm×100 mm
(2) resin plate: polycarbonate plate having a thickness of 1 mm
(3) glass plate: borosilicate glass having a thickness of 0.1 mm
(4) adhesive layer: Optically transparent pressure-sensitive adhesive sheet having a thickness of 0.1 mm
(5) light source: single chip white LED (having a blue central wavelength of 460 nm and a color temperature of 5,000 K)
(6) light scattering portions: engraving of a linear pattern with a laser on one entire surface of the resin plate
(7) functional coating: coating the adhesive surface side of one of the glass plates in white.

According to (1) to (7) above, a desk lamp to be used on a desk was manufactured, which had a feature of being thin, lightweight, and excellent in design. Further, the light guide plate satisfactorily reproduced color of light emitted from the light source.

### <Example 6>

(1) size and shape: planar plate of 800 mm×1,000 mm
(2) resin plate: acrylic plate having a thickness of 8 mm
(3) glass plate: alkali-free glass having a thickness of 0.3 mm
(4) adhesive layer: TPU having a thickness of 0.6 mm
(5) light source: multichip (RGB) white LED (having a blue central wavelength of 468 nm and a color temperature of 6,500 K)
(6) light scattering portions : screen printing of a dot pattern on one entire surface of the resin plate
(7) functional coating: absent

A plurality of the surface light-emitting devices according to (1) to (7) above were coupled to each other to manufacture a large-sized wall, which had a feature of being transparent when shut off, and, by lighting or flashing the surface light-emitting device through switching of R, G, and B, wall color and atmosphere of the wall can be changed. Further, the light guide plate satisfactorily reproduced color of light emitted from the light source.

### <Example 7>

(1) size and shape: semi-cylindrical plate of 600 mm×900 mm with a curvature of 2,000 mm
(2) resin plate: acrylic plate having a thickness of 5 mm
(3) glass plate: alkali-free glass having a thickness of 0.2 mm
(4) adhesive layer: TPU having a thickness of 0.4 mm
(5) light source: single chip white LED (having a blue central wavelength of 455 nm and a color temperature of 3,000 K)
(6) light scattering portions : screen printing of a dot pattern on one entire surface of the resin plate
(7) functional coating: absent

The surface light-emitting device according to (1) to (7) above was mounted to a ceiling portion of box-like space formed of transparent resin plates to be used as illumination, which had a feature of forming space having entirely transparent walls including the illuminating portion when shut off, and of illuminating an inside of the space by light emitted from the illuminating portion when lit.

### <Comparative Example>

(1) size and shape: planar plate of 300 mm×600 mm
(2) resin plate: acrylic plate having a thickness of 5 mm
(3) glass plate: alkali-free glass having a thickness of 0.2 mm
(4) adhesive layer: Optically transparent pressure-sensitive adhesive sheet having a thickness of 0.3 mm
(5) light source: single chip white LED (having a blue central wavelength of 450 nm and a color temperature of 6,500 K)
(6) light scattering portions: screen printing of a dot printed pattern on one entire surface of the resin plate
(7) functional coating: absent

A window of a double sided light emission type according to (1) to (7) above was manufactured, and edge light was caused to enter from one side of the window in a direction of a length of 600 mm. As the light was guided, absorption in a visible light short wavelength (blue-based color) became conspicuous, and emitted light exhibited yellowish tint when a light guide length becomes more than about 300 mm.

### Reference Signs List

- 1: light guide plate
- 2: light source
- 3: housing
- 11: resin plate
- 12: glass plate
- 13: light scattering portion
- 14: adhesive layer
- 15: functional coating

## Claims

1. A surface light-emitting device, comprising:
a light guide plate; and
a light source for causing light to enter the light guide plate from at least one end surface of the light guide plate,
the light guide plate comprising:
a resin plate;
glass plates respectively in close contact with and fixed to both surfaces of the resin plate via adhesive layers each comprising an adhesive; and
a light scattering portion for guiding light propagating within the resin plate and the glass plates to an outside,
the light source having a blue central wavelength in a wavelength range of 460 nm or more and 490 nm or less.

2. A surface light-emitting device, comprising:
a light guide plate; and
a light source for causing light to enter the light guide plate from at least one end surface of the light guide plate,
the light guide plate comprising:
a resin plate;
glass plates respectively in close contact with and fixed to both surfaces of the resin plate via an adhesive; and
a light scattering portion for guiding light propagating within the resin plate and the glass plates to an outside,
the light source having a blue central wavelength in a wavelength range of 440 nm or more and less than 460 nm and a color temperature of 4,000 K or lower.

3. The surface light-emitting device according to claim 1 or 2, wherein the light scattering portion is formed on a surface of any one of the resin plate and the glass plates and is covered with the adhesive layer.

4. The surface light-emitting device according to any one of claims 1 to 3, wherein the light scattering portion is formed on a surface of the resin plate.

5. The surface light-emitting device according to any one of claims 1 to 4, wherein the light scattering portion is formed on a surface of any one of the resin plate and the glass plates by printing a pattern with paint or ink containing a light scattering agent.

6. The surface light-emitting device according to any one of claims 1 to 5, wherein the resin plate has a thickness that is larger than a thickness of each of the glass plates.

7. The surface light-emitting device according to any one of claims 1 to 6, wherein the glass plates each have a thickness of from 0.05 mm to 1 mm.

8. The surface light-emitting device according to any one of claims 1 to 7, wherein the light source comprises an LED.
